# EUROPEAN PATENT APPLICATION

(11) **EP 1 182 536 A1**
(43) Date of publication of application: **27.02.2002**
(21) Application number: 00117645.2
(22) Date of filing: 16.08.2000
(51) Int. Cl.: G06F 1/16

(54) **Navigation in large data sets**

(71) Applicant: Sony International (Europe) GmbH, 10785 Berlin (DE)
(72) Inventor: Michelitsch, Georg, c/o Advanced Technology Center, 70327 Stuttgart (DE)
(74) Representative: Müller . Hoffmann & Partner Patentanwälte

(57) **Abstract**

A haptic input/output unit is used to navigate through structured data available within a computerized system or device so that a user sets a speed and/or direction of movement through the structured data based on haptic sensations, i.e. according to haptic force feedback.

## Description

The invention relates to the navigation in large data sets as a means to interact with a computerized system. In particular, the invention describes a method to navigate through structured data available within a computerized system or device.

Generally, it is known to provide different structures within large data sets or to indicate selected entries within such data sets to simplify the selection of a predetermined entry and/or the examination of the large data set, i. e. the navigation in large data sets.

On the other hand, haptic input/output units are known. The first examples of providing haptic feedback to users have been the result of work in the field of telerobotic systems. An early example would be the work by Goertz and Thompson [4] in the 1950's at the Argonne National Laboratory. The operator controlled a "master" arm that transmitted his commands to a remote slave. The "slave" follows the "master" input and interacts with the potentially harmful environment. Feedback signals received from sensors at the "slave" are transformed into force-feedback felt by the user grasping the "master" arm [1].

In 1965 Ivan Sutherland envisioned an ultimate display, which combined a 3D graphic image of a virtual computer generated model with the corresponding haptic feedback to the user [8]. This led to a research project at the University of North Carolina at Chapel Hill called GROPE, which has as its goal the simulation of molecular docking forces. Early results were presented in 1971 [2], and a much-improved version followed in 1990 [3].

During the same period of time, a general method for presenting virtually created objects to a human user through touch was described in US Patent No. 3,919,691 assigned to Bell Laboratories. Here, a general method and apparatus is described that allows a user to feel computer generated (virtual) object scenes through a force-feedback mechanism. Many haptic systems in the virtual reality community use the same principles as the system described in this document.

US Patent No. 5,844,392 assigned to Cybernet Systems in 1998 expands on the ideas expressed in US Patent No. 3,919,691 and introduces among other things the concept of a logical probe object associated with the haptic device. This probe moves as the haptic device moves and interacts with the virtual object scene. This interaction can be felt by the user through force-feedback,

One of the first haptic desktop devices to be used with a personal computer was developed by Minsky and colleagues at the Massachusetts Institute of Technology. It used a two-degree of freedom joystick that could apply force-feedback to the user in order to create the sensation of moving over various samples of sandpaper [7].

The first commercial systems were introduced in the early 1990's. The PHANToM arm [6] and the Impulse Engine [5] are two popular low cost solutions available today.

With similar devices various applications in the Virtual Reality domain were developed, such as VR training systems for the medical community, virtual reality video games at home and in arcades, and applications for the military such as aircraft trainers [1].

Another area for applying haptic feedback has been the augmentation of traditional graphical user interfaces (GUI). As described in WO 97/21160 A2 assigned to Immersion Human Interface Corporation, force-feedback is applied to a modified PC input device such as mouse or pen, whenever the user interacts through a cursor with familiar on-screen user interface components such as buttons, sliders, and menus. Therewith, the haptification of a general purpose graphical user interface for desktop computers is described. In great detail several methods for adding haptic feedback to the operation of common user interface controls in a graphical user interface such as sliders, buttons, menus, and windows are shown. To that end, forces for the haptic input/ output device are created that are based on a metric, which uses the distance between the on-screen cursor and a user interface widget. This way, an inherently two-dimensional user interface gains a third, haptic dimension.

However, the prior art discussed above is more or less focussed on the haptic input/output device and its graphical representation in a computerized system.

Further, there is a special class of pointing devices, called isometric joysticks, which allow the user to control not only the direction but also the speed at which an associated cursor moves on screen. The force felt by the user when moving the joystick is pre-set at the time of manufacture and independent of the situation the device is used in. The user can usually, however, adjust the function that defines the acceleration [10].

It is the object underlying the present invention to provide an improved method to navigate through structured data available within a computerized system or device.

This object is solved by the method according to the present invention defined in independent claim 1. Preferred embodiments thereof are respectively defined in the following dependent claims 2 to 9.

Therewith, according to the present invention the method to navigate through structured data available within a computerized system or device is characterized by using a haptic input/output unit to set a speed and/or direction of movement through the structured data.

This combination of haptic technology to navigate through structured data enables a very easy and uncomplicated scrolling through such data, since in particular the speed and the direction of such a scrolling can easily be adjusted in case a haptic feedback is provided to the user who wants to examine the large data set and/or wants to selected a predetermined data entry thereof.

Preferably, said structured data is a one-dimensional, two-dimensional or multi-dimensional list of items and/or graphically structured.

Further preferably, a cursor associated to said haptic input/output unit is displayed within a display of said structured information.

Further preferably, said cursor gets relatively moved into a predetermined direction within said graphically structured data in case the haptic input/output unit is moved and/or tilted into a corresponding direction.

Further preferably, the speed of said cursor in a predetermined direction within said graphically structured data is set dependent on the degree of movement and/or tilting of the haptic input/output unit in the corresponding direction.

Further preferably, the force-feedback output from the haptic input/output unit in a predetermined direction is set dependent on the degree of movement and/or tilting of the haptic input/output unit in the corresponding direction.

In this case defining the force-feedback, further preferably, the dependency of the force-feedback output from the haptic input/output unit in a predetermined direction on the degree of movement and/or tilting of the haptic input/ output unit in the corresponding direction is a non-linear function. Advantageously, according to said non-linear function an equivalent force-feedback is generated with movement and/or tilting of the haptic input/output unit.

Further preferably, an initial resistance is set to move and/or tilt the haptic input/output unit.

Further preferably, an initial resistance is set to move and/or tilt the haptic input/output device from its resting position before the force-feedback output from haptic input/output unit in a predetermined direction is dependent on the degree of movement and/or tilting of the haptic input/output unit in the corresponding direction.

Alternatively or additionally, in a null position with a degree of movement and/ or tilting of the haptic input/output unit in a predetermined direction below a first threshold no force feedback is generated and no movement through the structured data is performed, in a resting position upon a degree of movement and/or tilting of the haptic input/output unit in a predetermined direction above said first threshold and below a second threshold a constant force feedback is generated and a single step mode of movement through the structured data is performed, and in an active position upon a degree of movement and/ or tilting of the haptic input/output unit in a predetermined direction above said second threshold an increasing force feedback is generated with increasing degree of movement and/or tilting of the haptic input/output unit in said predetermined direction and a continuous mode of movement through the structured data is performed.

In this case haptic navigation through structured data provides a particular advantage in that the tactile feedback to the user is also given to set a scrolling speed and direction for kind of navigation through the structured data.

An example of such a shifting into modes of preset speeds to navigate through the structured data might be that in a first mode the cursor associated with the haptic input/output unit does not move within the structured data, in a second mode a slow speed of relative movement in-between the cursor and the structured data in a predetermined direction is introduced and in a third mode a fast speed of relative movement between the cursor and the structured data is introduced. Of course, according to the present invention it is possible that more modes are defined for movements into arbitrary directions with arbitrary speeds or jumping to a predetermined area of the structured data.

The proposed mechanism allows the user to navigate through graphically structured information (such as maps) and one or two-dimensional lists of items with simple hand movements. The mechanism allows easy navigation at different speeds enabled through force-feedback.

Further, according to the present invention force-feedback can be adapted to the underlying data through which the user navigates. This feature distinguishes it from ordinary isometric joysticks.

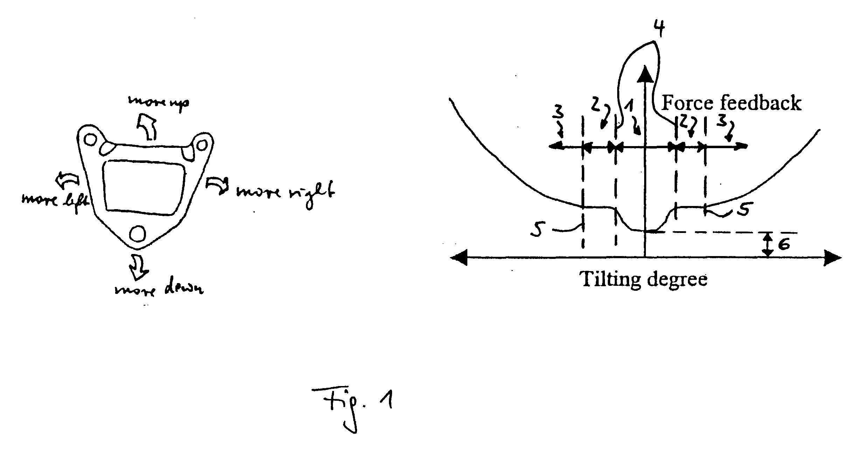

Further features and advantages of the present invention will become apparent from the following detailed description of a preferred embodiment thereof taken in conjunction with the accompanying drawings, wherein
- **Fig. 1**: elucidates a tilting mechanism for navigation in large data sets.

The user interface device as shown on the left hand side of Fig. 1 and in detail described in the applicant's parallel application "Haptic Terminal" which contents are herewith included by reference can be tilted in each direction. To that end a suspension linkage that allows two degrees of freedom for the user interface device has to be provided.

The force-feedback created by the device establishes a force field that allows the user to tilt the device from its null position 1 in which no or only a small force feedback is created and no updating of the display and/or moving of a cursor within the structured data is carried out to a resting position 2, i.e. mode, where a constant force feedback stronger than in the null position 1 is created and where one unit, i. e. one or more pixels or one or more items in the list, is used for updating the display. This means, in this resting position 2 the map or data gets shifted by one unit at a time, i.e. the next item in the list gets highlighted in case of a list and a unit of one item. An optional "repeat function" repeats the operation as long as the user keeps the device in that resting position 2. As the user tilts the device further an active position 3 is reached in which the force-feedback will become stronger with further tilting and the speed of the change in the display will increase in a linear or non-linear manner accordingly. In other words, the higher the force-feedback the larger the amount of pixels or items that will be skipped per unit of time.

Fig. 8 shows on the right hand side a function of the force-feedback versus the tilting degree, which function is generally a parabolic function, i. e. the higher the absolute value of the tilting degree in one degree of freedom, the higher the force-feedback increases in a non-linear manner. However, in the area of no tilting, i.e. in the null position 1 which is centered around the force-feedback-axis below a first threshold 4 in tilting degree directions, the force-feedback is constantly low, i.e. an initial offset 6 might be provided, or no force-feedback is provided and leaving said area first a strong force-feedback is provided which is kept constant in the resting position 2, which lies above the first threshold 4 and below a second threshold 5 in tilting degree directions, and upon further tilting into the active position 3, which lies above the second threshold 5, increases with said before-described parabolic function.

However, this function might have a different shape, e.g. so that within a further resting position again a constant force-feedback is applied. Upon leaving said resting position the force feedback according to the parabolic function might be resumed.

Further, as mentioned above, it is possible that more than one such resting position 2 or mode is provided, which have respective different functions assigned thereto, e.g. the structured data shifts by more than one unit at a time.

Also, it is possible that dependent on the position within the structured data after leaving the null position 1 an initial offset 6 of force feedback is given to the user.

### References

1. Burdea, C. Grigore: "Force and Touch Feedback for Virtual Reality". John Wiley & Sons, Inc. 1996.
2. Batter, J. and F. Brooks Jr.: "GROPE-I: A computer display to the sense of feel". Proceedings of ITIP Congress 1971, pp. 759- 763.
3. Brooks, F. Jr., M. Ouh-Young, J. Batter and A. Jerome. "Project GROPE - Haptic Displays for Scientific Visualization". Computer Graphics, Vol. 24, No. 4, 1990, pp. 177 - 185.
4. Goertz, R. and R. Thompson. "Electronically comtrolled manipulator". Nucleonics 1954, pp. 46 - 47.
5. Jackson, B. and L. Rosenberg. "Force Feedback and Medical Simulation". Interactive Technology and the New Paradigm for Healthcare, IOS Press, Amsterdam, Chapter 24, pp. 147- 151, January 1995.
6. Massie, T. and K. Salisbury. "The PHANToM Haptic Interface: A Device for Probing Virtual Objects". ASME Winter Annual Meeting, DSC-Vol. 55-1, ASME, New York 1994, pp. 295- 300.
7. Minsky, M., M. Ouh-Young, O. Steele, F. Brooks Jr. and M. Behensky. "Feeling and Seeing: Issues in Force Displays". Computer Graphics, ACM Press, Vol. 24, No. 2, March 1990, pp. 235- 243.
8. Sutherland, I. "The Ultimate Display". Proceedings of International Federation of Information Processing 1965, pp. 506 - 508.
9. McNeely, W., Puterbaugh, K., and Troy, J. "Six Degree-of-Freedom Haptic Rendering Using Voxel Sampling". Proceedings of SIGRAPH '99.
10. Shneiderman, B.: "Designing the User Interface", Addison-Wesley 1998.

## Claims

1. Method to navigate through structured data available within a computerized system or device, **characterized by** the use of a haptic input/output unit to set a speed and/or direction of movement through the structured data.

2. Method according to claim 1, **characterized in that** said structured data is a one-dimensional, two-dimensional or multi-dimensional list of items and/or graphically structured.

3. Method according to claim 1 or 2, **characterized by** displaying a cursor associated to said haptic input/output unit within a display of said graphically structured information.

4. Method according to claim 3, **characterized by** relatively moving said cursor within said structured data into a predetermined direction in case the haptic input/output unit is moved and/or tilted into a corresponding direction.

5. Method according to anyone of the preceding claims, **characterized by** setting the speed of movement in a predetermined direction within said structured data dependent on the degree of movement and/or tilting of the haptic input/output unit in the corresponding direction.

6. Method according to anyone of the preceding claims, **characterized by** setting a force feedback output from the haptic input/output unit in a predetermined direction dependent on the degree of movement and/or tilting of the haptic input/output unit in the corresponding direction.

7. Method according to claim 6, **characterized in that** the dependency of the force feedback output from the haptic input/output unit in a predetermined direction on the degree of movement and/or tilting of the haptic input/ output unit in the corresponding direction is a non-linear function.

8. Method according to claim 7, **characterized in that** according to said non-linear function an exponential stronger force-feedback is generated with movement and/or tilting of the haptic input/output unit.

9. Method according to anyone of claims 6 to 8, **characterized in that** an initial resistance is set to move and/or tilt the haptic input/output device from its null position (1) before the force feedback output from the haptic input/ output unit in a predetermined direction is dependent on the degree of movement and/or tilting of the haptic input/output unit in the corresponding direction.

10. Method according to anyone of claims 6 to 9, **characterized in that**
in a null position (1) with a degree of movement and/or tilting of the haptic input/output unit in a predetermined direction below a first threshold (4) no force feedback is generated and no movement through the structured data is performed,
in a resting position (2) upon a degree of movement and/or tilting of the haptic input/output unit in a predetermined direction above said first threshold (4) and below a second threshold (5) a constant force feedback is generated and a single step mode of movement through the structured data is performed, and
in an active position (3) upon a degree of movement and/or tilting of the haptic input/output unit in a predetermined direction above said second threshold (5) an increasing force feedback is generated with increasing degree of movement and/or tilting of the haptic input/output unit in said predetermined direction and a continuous mode of movement through the structured data is performed.
